# EUROPEAN PATENT APPLICATION

(11) **EP 3 722 173 A1**
(43) Date of publication of application: **14.10.2020**
(21) Application number: 18898350.6
(22) Date of filing: 26.12.2018
(51) Int. Cl.: B60W 40/10, B60W 40/02, B60W 40/072, B60W 30/14

(54) **ELECTRONIC DEVICE AND METHOD FOR CORRECTING VEHICLE LOCATION ON MAP**

(30) Priority: 04.01.2018 KR 20180001288
(71) Applicant: Samsung Electronics Co., Ltd., Gyeonggi-do 16677 (KR)
(72) Inventor: KIM, Myungsik, Suwon-Si, Gyeonggi-do 16677 (KR); LIM, Taegyu, Suwon-Si, Gyeonggi-do 16677 (KR); MOON, Boseok, Suwon-Si, Gyeonggi-do 16677 (KR)
(74) Representative: Nederlandsch Octrooibureau
(86) International application number: PCT/KR2018/016651
(87) International publication number: WO 2019/135537

(57) **Abstract**

Provided is an electronic device and method of correcting a location of a vehicle on a map. The electronic device for correcting a location of a moving vehicle on a map includes a location measurement device configured to obtain location information of the vehicle, an imaging device configured to generate a captured image by photographing a plurality of objects located near the vehicle, a sensor configured to output a sensing signal toward surroundings of the vehicle and receive a sensing signal reflected from the plurality of objects, and a processor configured to determine the location of the vehicle on the map, to select at least one of the plurality of objects in the captured image, to calculate a first distance between the selected at least one object and the vehicle based on the reflected sensing signal, and to correct the location of the vehicle on the map based on the calculated first distance.

## Description

### TECHNICAL FIELD

The present disclosure relates to an electronic device and method for correcting a location of a vehicle on a map, and more particularly, to an electronic device and method for correcting a location of a vehicle on a map based on a distance to an object located near the vehicle.

### BACKGROUND ART

Along with the development of network and multimedia technologies, a technique for providing various services to a user aboard a vehicle by using map information of a road on which the vehicle is moving or running. For example, a technique has been developed to provide navigation information to the user in the vehicle by using road information collected through the vehicle and to lead the vehicle to safely perform autonomous driving.

Accordingly, there exists a need for a technique of providing a good-quality service to the user in the vehicle by accurately correcting the location of the vehicle on the map.

### DESCRIPTION OF EMBODIMENTS

### TECHNICAL PROBLEM

Some embodiments provide an electronic device and method for correcting a location of a vehicle on a map, by selecting at least one of a plurality of objects located near the vehicle and calculating a distance to the selected at least one object.

Some embodiments provide an electronic device and method for correcting a location of a vehicle on a map in which at least one of a plurality of objects located near the vehicle may be selected based on a certain priority.

Some embodiments provide an electronic device and method for determining whether to correct a location of a vehicle on a map by detecting a plurality of objects located near the vehicle.

### BRIEF DESCRIPTION OF DRAWINGS

FIG. 1 illustrates an example in which an electronic device of a vehicle corrects a location of the vehicle on a map, by using a plurality of objects on a road, according to some embodiments.
FIG. 2 is a flowchart illustrating a method, performed by an electronic device, of correcting a location of a vehicle on a map, according to some embodiments.
FIG. 3 is a flowchart illustrating a method, performed by an electronic device, of selecting an object to be used for location correction from among a plurality of objects near a vehicle, according to some embodiments.
FIG. 4 illustrates an example in which an electronic device photographs and detects a plurality of objects located near a vehicle, according to some embodiments.
FIGS. 5 and 6 illustrate an example in which an electronic device detects a plurality of objects located near a vehicle, based on a sensing signal reflected from an object, according to some embodiments.
FIG. 7 is a flowchart illustrating a method, performed by an electronic device, of selecting an object to be used for location correction from among a plurality of objects near a vehicle, based on a certain priority, according to some embodiments.
FIG. 8 illustrates an example in which an electronic device determines a priority for object selection when there is no object nearby an object to be used for location correction, according to some embodiments.
FIG. 9 illustrates an example in which an electronic device determines a priority for object selection when there are many objects nearby an object to be used for location correction, according to some embodiments.
FIG. 10 is a flowchart illustrating a method, performed by an electronic device, of determining whether to correct a location of a vehicle, according to some embodiments.
FIG. 11 illustrates an example in which an electronic device determines to correct a location of a vehicle, according to some embodiments.
FIG. 12 illustrates an example in which an electronic device does not correct a location of a vehicle, according to some embodiments.
FIG. 13 is a flowchart illustrating a method, performed by an electronic device, of correcting a location of a vehicle by using map information, according to some embodiments.
FIG. 14 illustrates an example in which an electronic device corrects a location of a vehicle over time, according to some embodiments.
FIG. 15 is a flowchart illustrating a method, performed by an electronic device, of correcting a location of a vehicle when the vehicle is moving on a straight road, according to some embodiments.
FIG. 16 illustrates an example in which an electronic device calculates a distance for location correction when a vehicle is moving on a straight road, according to some embodiments.
FIG. 17 is a flowchart illustrating a method, performed by an electronic device, of correcting a location of a vehicle when the vehicle is moving on a curved road, according to some embodiments.
FIG. 18 illustrates an example in which an electronic device calculates a distance for location correction when a vehicle is moving on a curved road, according to some embodiments.
FIG. 19 illustrates an example where an electronic device selects a plurality of objects for location correction of a vehicle and changes a location of the vehicle on a map based on a distance to the plurality of objects, when the vehicle is moving on a straight road, according to some embodiments.
FIG. 20 illustrates an example where an electronic device selects a plurality of objects for location correction of a vehicle and changes a location of the vehicle on a map based on a distance to the plurality of objects, when the vehicle is moving on a curved road, according to some embodiments.
FIG. 21 is a flowchart illustrating a method, performed by an electronic device, of correcting a location of a vehicle in a plurality of directions, according to some embodiments.
FIG. 22 is a hardware block diagram of an electronic device according to some embodiments.
FIGS. 23 and 24 are hardware block diagrams of an electronic device and a vehicle, according to some embodiments.

### BEST MODE

According to a first aspect of the disclosure, there is provided an electronic device for correcting a location of a moving vehicle on a map, the electronic device including a location measurement device configured to obtain location information of the vehicle, an imaging device configured to generate a captured image by photographing a plurality of objects located near the vehicle, a sensor configured to output a sensing signal toward surroundings of the vehicle and receive a sensing signal reflected from the plurality of objects, and a processor configured to determine the location of the vehicle on the map, to select at least one of the plurality of objects in the captured image, to calculate a first distance between the selected at least one object and the vehicle based on the reflected sensing signal, and to correct the location of the vehicle on the map based on the calculated first distance.

According to a second aspect of the disclosure, there is provided a method, performed by an electronic device, of correcting a location of a moving vehicle on a map, the method including determining the location of the vehicle on the map, by using a location measurement device, obtaining a captured image by photographing a plurality of objects located near the vehicle, outputting a sensing signal toward surroundings of the vehicle, receiving a sensing signal reflected from the plurality of objects, selecting at least one of the plurality of objects in the captured image, calculating a first distance between the selected at least one object and the vehicle based on the reflected sensing signal, and correcting the location of the vehicle on the map based on the calculated first distance.

According to a third aspect of the present disclosure, there is provided a non-transitory computer-readable recording medium having recorded thereon a program for executing the method according to the second aspect on a computer.

### MODE OF DISCLOSURE

Hereinafter, embodiments of the disclosure will be described in detail with reference to the attached drawings to allow those of ordinary skill in the art to easily carry out the embodiments. However, the disclosure may be implemented in various forms, and are not limited to the embodiments described herein. To clearly describe the disclosure, parts that are not associated with the description have been omitted from the drawings, and throughout the specification, identical reference numerals refer to identical parts.

In a description of the embodiments of the disclosure, when a part is connected to another part, the part is not only directly connected to another part but also electrically connected to another part with another device intervening in them. When it is assumed that a certain part includes a certain component, the term "including" means that a corresponding component may further include other components unless a specific meaning opposed to the corresponding component is written.

Although the terms including ordinal numbers such as "first" and "second" used herein may be used to describe various elements, these terms may be used to distinguish one element from another element or for convenience of a description.

Herein, an object on a road may be an object located in front or near a moving vehicle, and may include, for example, but not limited to, traffic lights, a sign, an overpass, etc.

Hereinafter, the present disclosure will be described with reference to the accompanying drawings.

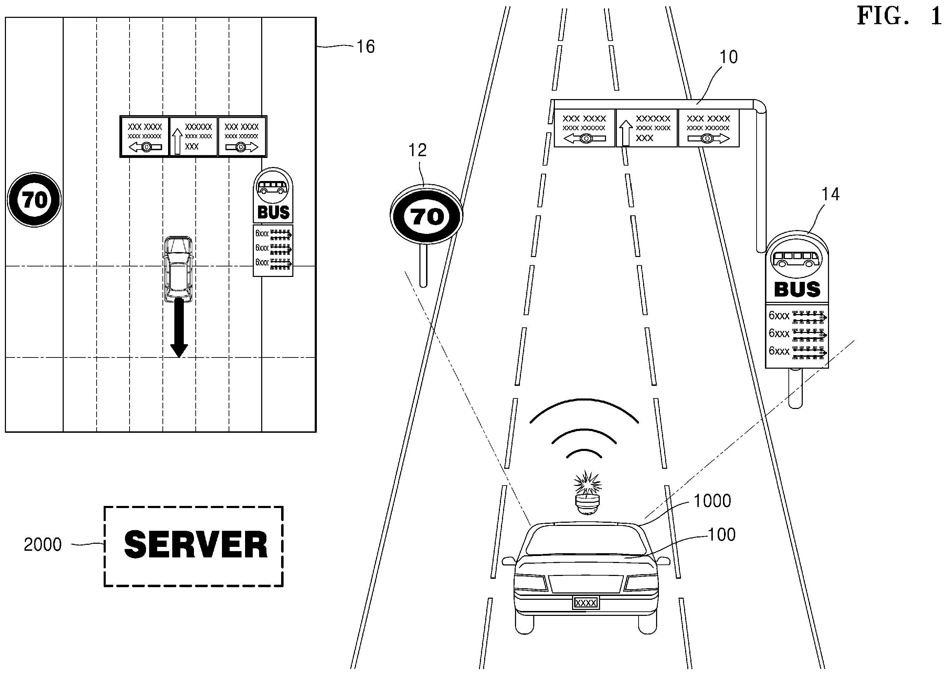

FIG. 1 illustrates an example in which an electronic device 100 of a vehicle 1000 corrects a location of the vehicle 1000 on a map, by using a plurality of objects on a road, according to some embodiments.

Referring to FIG. 1, the electronic device 100 in the vehicle 1000 may identify a plurality of objects 10, 12, and 14 located near the moving vehicle 1000, and correct a location of the vehicle 1000 on a map 16 used by the electronic device 100 based on a distance between the vehicle 1000 and at least one of the plurality of objects 10, 12, and 14.

The electronic device 100 may photograph the plurality of objects 10, 12, and 14 located near the vehicle 1000, and detect the plurality of objects 10, 12, and 14 by using a distance sensor. The electronic device 100 may select at least one of the plurality of objects 10, 12, and 14 and correct the location of the vehicle 1000 indicated on a road of the map 16 based on a distance between the selected object and the vehicle 1000. The object selected by the electronic device 100 may be an object corresponding to a landmark, and may be an object registered as a landmark located near a current location of the vehicle 1000 on a map used by the electronic device 100. The electronic device 100 may determine whether to correct the location of the vehicle 1000 based on reliabilities of the plurality of objects 10, 12, and 14 by using the distance sensor. Thus, the electronic device 100 may accurately correct the location of the vehicle 1000 by using an object having a high reliability detected among the plurality of objects 10, 12, and 14.

The electronic device 100 may transmit and receive data, used for correction of the location of the vehicle 1000 on the map, to and from a server 2000 through a network. The server 2000 may include a communicator (not shown), a processor (not shown), and a storage (not shown), and may perform some of the following operations of the electronic device 100 to be performed for correction of the location of the vehicle 1000 on the map and transmit and receive data for correcting the location of the vehicle 1000 on the map to and from the electronic device 100.

The electronic device 100 may be a device for controlling an operation of the vehicle 1000 and may be, for example, a head unit of the vehicle 1000. The electronic device 100 may be an electronic device connected to the head unit of the vehicle 1000, and may be, for example, but not limited to, a smartphone, a tablet personal computer (PC), a PC, a smart television (TV), a cellular phone, a personal digital assistant (PDA), a laptop, a black box device, a media player, a micro sever, a navigation device, or other mobile or non-mobile computing devices. The electronic device 100 may also be a wearable device such as a watch, glasses, a hair band, or a ring, which has a communication function and a data processing function. However, the electronic device 100 may include any type of devices capable of detecting an object located in front of the vehicle 1000 and correcting the location of the vehicle 1000 on the map. In this case, the electronic device 100 may be connected with the head unit of the vehicle 1000 through wired/wireless communication. For example, the electronic device 100 may be connected with the head unit of the vehicle 1000 through, but not limited to, a wireless local area network (WLAN) (wireless fidelity, Wi-Fi), Bluetooth, Bluetooth low energy, Zigbee, Wi-Fi direct (WFD), ultra wideband (UWB), infrared Data Association (IrDA), near field communication (NFC), etc.

The network may include a local area network (LAN), a wide area network (WAN), a value added network (VAN), a mobile radio communication network, a satellite communication network, and a combination thereof, and may be a data communication network having a comprehensive meaning, which enables element entities needed for implementation of the present disclosure to communicate with one another smoothly and may include wired Internet, wireless Internet, and a mobile wireless communication network.

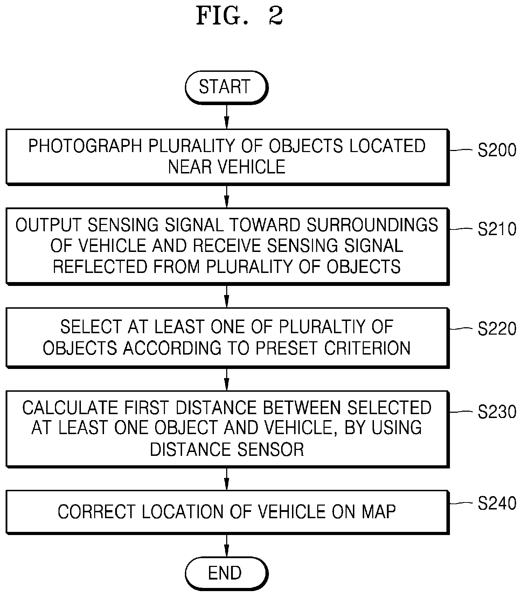

FIG. 2 is a flowchart illustrating a method, performed by the electronic device 100, of correcting a location of the vehicle 1000 on a map, according to some embodiments.

In operation S200, the electronic device 100 may photograph a plurality of objects located near the vehicle 1000. The electronic device 100 may control an imaging device directed near the vehicle 1000 to photograph the plurality of objects. The imaging device may be implemented fixedly on the vehicle 1000 or may be implemented movably on the vehicle 1000 like a terminal, a robot, etc. The imaging device may include an image sensor and a camera, but may also include various devices capable of photographing an object, without being limited thereto.

For example, a camera photographing a plurality of objects may be, but not limited to, a camera installed in the vehicle 1000 in manufacturing of the vehicle 1000. The camera photographing the plurality of objects may be a camera installed in the vehicle by the user, and in this case, the electronic device 100 may control the camera after being communication-connected with the camera. For example, the camera may include, but not limited to, a camera of a black box device and a camera of a smartphone. The electronic device 1000 may photograph a front, a side, or a back of the vehicle 1000 by controlling the camera, and the camera may be a mobile camera, a rotatable camera, or a fixed camera.

An image captured by the imaging device may include, but not limited to, a two-dimensional (2D) image, a three-dimensional (3D) image, a panoramic image, or a stitched image.

The plurality of objects may be located near the vehicle 1000, and may include an object of a preset type to be used for correction of the location of the vehicle 1000 and a nearby object hindering correction of the location of the vehicle 1000. The object of the preset type used for correction of the location of the vehicle 1000 may be an object included on the map near the road on which the vehicle 1000 moves or runs, and the nearby object hindering correction of the location of the vehicle 1000 may be an object that is not included on the map near the road on which the vehicle 1000 moves.

For example, the object of the preset type used for correction of the location of the vehicle 1000 may include, but not limited to, a sign, traffic lights, an overpass, and a pedestrian overpass. In addition, the object of the preset type used for correction of the location of the vehicle 1000 may include a sign, traffic lights, an overpass, a pedestrian overpass, etc., registered in a region near the current location of the vehicle 1000 on a map being used by the electronic device 100.

For example, a nearby object that disturbs location correction of the vehicle 1000 may include an object that hinders the electronic device 100 from recognizing an object used for location correction of the vehicle 1000, for example, but not limited to, another vehicle, people, street trees, a guardrail, and so forth located in front of the vehicle 1000.

The map used by the electronic device 100 may be stored in, but not limited to, a storage device (not shown) in the vehicle 1000, a memory of the electronic device 100, and a certain server (not shown) that provides map information.

In operation S210, the electronic device 100 may output a sensing signal to surroundings of the vehicle 1000 and receive sensing signals reflected from a plurality of objects. The electronic device 100 may radiate a signal for detecting the plurality of objects toward the front of the vehicle 1000 by using a distance sensor, while photographing the plurality of objects located in front of the vehicle 1000. The electronic device 100 may receive signals reflect from the plurality of objects located in front of the vehicle 1000. The distance sensor may be a sensor used to detect an object in front of the vehicle 1000 and calculate a distance to the object, and may be, for example, but not limited to, a radar sensor, lidar sensor, or an ultrasonic sensor.

In operation S220, the electronic device 100 may select at least one of the plurality of objects according to a preset criterion. The electronic device 100 may identify the plurality of objects from a captured image. The electronic device 100 may select an object to be used for location correction from among the identified plurality of objects, in which an object having a high reliability may be selected according to a preset criterion.

The electronic device 100 may distinguish an object included in a map of the surroundings of a road on which the vehicle 1000 is moving from an object that is not included in the map of the surroundings of the road on which the vehicle 1000 is moving, from the image captured by photographing the plurality of objects. In this case, the electronic device 100 may obtain map information about the map of the surroundings of the road on which the vehicle 1000 is moving, and compare the map information with an object in an image captured by photographing a registered object near the vehicle 1000 based on the obtained map information, thus distinguishing an object included in the map from an object that is not included in the map among the photographed plurality of objects.

The object included in the map of the surroundings of the road on which the vehicle 1000 is moving may be an object used for location correction of the vehicle 1000, and the object that is not included in the map of the surroundings of the road may be a nearby object that hinders location correction of the vehicle 1000.

The electronic device 100 may select at least one of the plurality of objects based on a signal reflected from the plurality of objects. In this case, the electronic device 100 may identify an object of a preset type available for location correction of the vehicle 1000 among the plurality of objects, by comparing the reflected signal with the captured image.

The electronic device 100 may select an object to be used for location correction from among the plurality of objects, based on a shape of the road at the time of photographing the plurality of objects, a type of a distance sensor used to detect the plurality of objects, etc. The electronic device 100 may select the object to be used for location correction from among the plurality of objects, based on a preset priority.

A method, performed by the electronic device 100, of selecting an object to be used for location correction from among the plurality of objects will be described later.

In operation S230, the electronic device 100 may calculate a first distance between the selected object and the vehicle 1000, by using the distance sensor. The electronic device 100 may output a signal toward the plurality of objects near the vehicle 1000 by using the distance sensor and receive a signal reflected from the plurality of objects. The output of the signal and reception of the reflected signal may be performed together by the electronic device 100, during photographing of the plurality of objects using a camera. The electronic device 100 may identify a signal reflected from the object, selected from among signals reflected from the plurality of objects, and calculate the first distance between the selected object and the vehicle 1000 based on the identified signal.

In operation S240, the electronic device 100 may correct a location of the vehicle 1000 on the map. To this end, the electronic device 100 may obtain a second distance between the location of the vehicle 1000 on the map and a location of the selected object on the map, based on the map information and a photographing time of the plurality of objects. The map information may include information related to the road on which the vehicle 1000 is moving, for example, information about the shape of the road, the topography of the road, and an object near the road. For example, the map information may include information about a slope of the road, a curvature of the road, a width of a lane, a structure near the road, etc.

The electronic device 100 may identify a location of the vehicle 1000 corresponding to the photographing time of the plurality of objects from the map information. The location of the vehicle 1000 on the map may be determined by a global positioning system (GPS) value indicating the location of the vehicle 1000 at the time of photographing the plurality of objects. The location of the vehicle 1000 on the map may be obtained using an inertial measurement unit (IMU) device. The location of the vehicle 1000 on the map may be obtained based on information about a base station communication-connected with the electronic device 100.

The electronic device 100 may identify the location of the selected object on the map from a map indicating the surroundings of a place where the vehicle 1000 is located at the time of photographing the plurality of objects.

The electronic device 100 may calculate the second distance between the location of the vehicle 1000 on the map and the location of the selected object on the map, by using the location of the vehicle 1000 on the map and the location of the selected object on the map.

The electronic device 100 may correct the location of the vehicle 1000 on the map, based on the first distance and the second distance. In this case, the electronic device 100 may correct the location of the vehicle 1000 based on the shape of the road on which the vehicle 1000 is moving at the time of photographing the plurality of objects.

While the electronic device 100 is described above as correcting the location of the vehicle 1000 based on the photographing time of the plurality of objects, the disclosure is not limited thereto. The electronic device 100 may correct the location of the vehicle 1000 based on at least one of a time at which the electronic device 100 photographs the plurality of objects, a time at which the electronic device 100 outputs a signal by using the distance sensor, or a time at which the electronic device 100 receives a signal reflected from the plurality of objects by using the distance sensor.

The time in which the electronic device 100 photographs the plurality of objects, the time in which the electronic device 100 outputs a signal by using the distance sensor, and the time in which the electronic device 100 receives a signal reflected from the plurality of objects by using the distance sensor may be substantially the same as one another.

When the time in which the electronic device 100 photographs the plurality of objects, the time in which the electronic device 100 outputs a signal by using the distance sensor, and the time in which the electronic device 100 receives a signal reflected from the plurality of objects by using the distance sensor are meaningfully different from one another, the electronic device 100 may correct the location of the vehicle 1000 on the map based on a difference.

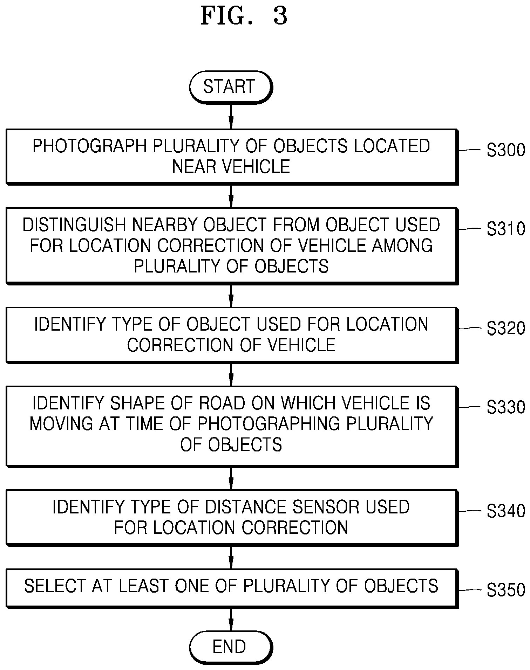

FIG. 3 is a flowchart illustrating a method, performed by the electronic device 100, for selecting an object to be used for location correction from among a plurality of objects near the vehicle 1000, according to some embodiments.

In operation S300, the electronic device 100 may photograph the plurality of objects located near the vehicle 1000. The electronic device 100 may photograph the plurality of objects located in front of the vehicle 1000 by using the camera in the electronic device 100 or a camera connected with the electronic device 100.

In operation S310, the electronic device 100 may distinguish a nearby object from a preset object to be used for location correction of the vehicle 1000 among the plurality of objects. The electronic device 100 may distinguish an object to be used for correction of the location of the vehicle 1000 from a nearby object hindering correction of the location of the vehicle 1000 in an image captured by photographing the plurality of objects.

The electronic device 100 may estimate the object to be used for location correction of the vehicle 1000 among the plurality of objects, based on a signal reflected from the plurality of objects. In this case, the electronic device 100 may estimate the object to be used for location correction, by comparing the image captured by photographing the plurality of objects with objects detected from the signal reflected from the plurality of objects.

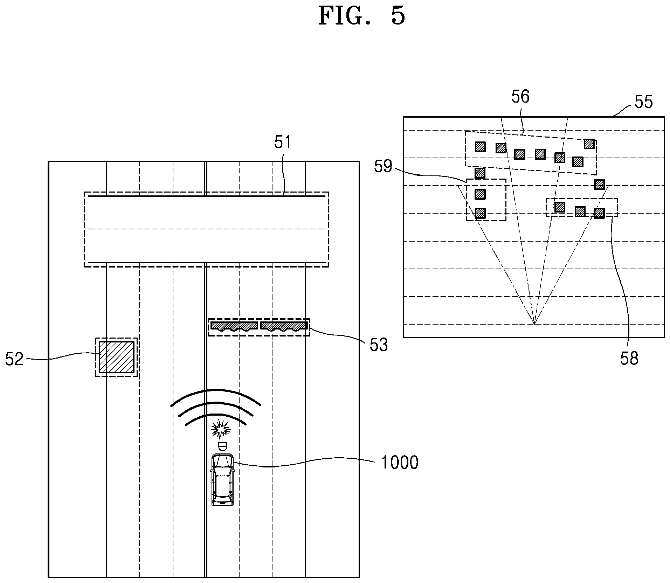

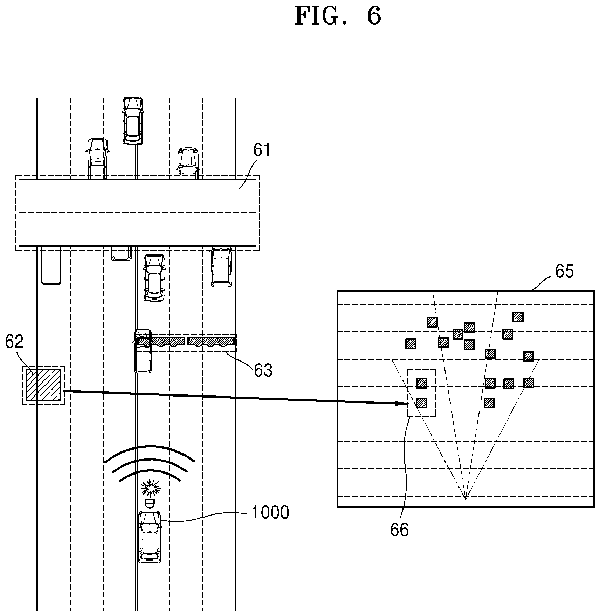

When there are many nearby objects that hinder location correction of the vehicle 1000 near the object to be used for location correction of the vehicle 1000, the electronic device 100 may not identify the object to be used for location correction. An example where the electronic device 100 identifies the object to be used for location correction will be described in more detail with reference to FIGS. 5 and 6.

In operation S320, the electronic device 100 may identify a type of the object to be used for location correction of the vehicle 1000. The electronic device 100 may determine the type of the object to be used for location correction of the vehicle 1000, based on at least one of the image captured by photographing the plurality of objects or a signal (e.g., sensing data) received after reflected from the plurality of objects. For example, the electronic device 100 may determine whether the object to be used for location correction of the vehicle 1000 is a sign, signal traffics, a pedestrian overpass, etc. In this case, when there are many nearby objects that hinder location correction of the vehicle 1000 near the object to be used for location correction of the vehicle 1000, the electronic device 100 may not determine the object to be used for location correction.

In operation S330, the electronic device 100 may the shape of the road on which the vehicle 1000 is moving at the time of photographing the plurality of objects. The electronic device 100 may determine the shape of the road on which the vehicle 1000 is moving at the time of photographing the plurality of objects, by using the image captured by photographing the plurality of objects and map information of the surroundings of the location of the vehicle 1000 at the time of photographing the plurality of objects. The electronic device 100 may determine whether the road is a straight road or a curved road. The electronic device 100 may determine a curvature of the curved road.

In operation S340, the electronic device 100 may identify a type of the distance sensor used for location correction. The electronic device 100 may identify an object near the vehicle 1000 and identify the type of the distance sensor used for calculation of a distance. For example, the electronic device 100 may determine whether a radar sensor has been used, a lidar sensor has been used, or an ultrasonic sensor has been used, for location correction of the vehicle 1000, without being limited thereto.

In operation S350, the electronic device 100 may select at least one of the plurality of objects. The electronic device 100 may select at least one of the plurality of objects for location correction of the vehicle 1000 according to various criteria based on at least one of operations S310 through S340.

For example, when the vehicle 1000 is moving on the straight road, the electronic device 100 may select an overpass in front of the vehicle 1000, crossing the road on which the vehicle 1000 is moving. When there are many street trees outside the road on which the vehicle 1000 is moving and many other vehicles in front of the vehicle 1000, the vehicle 1000 may select a sign inside the road. However, an example in which the vehicle 1000 selects the object to be used for location correction is not limited thereto.

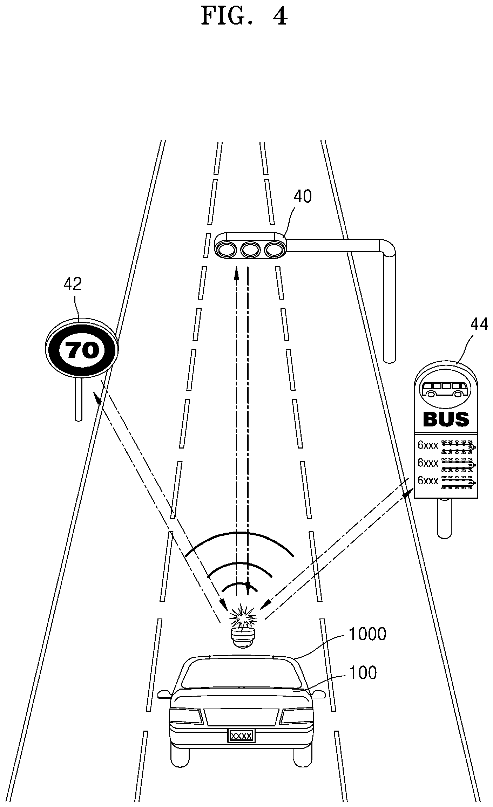

FIG. 4 illustrates an example in which the electronic device 100 photographs and detects a plurality of objects located near the vehicle 1000, according to some embodiments.

Referring to FIG. 4, during driving of the vehicle 1000, the electronic device 100 may detect a traffic light 40, a traffic sign 42, and a bus route map 44 located in front of the vehicle 10000, while photographing the front of the vehicle 1000. To detect the traffic light 40, the traffic sign 42, and the bus route map 44, the electronic device 100 may control the camera to photograph the front of the vehicle 1000 and at the same time, control a sensor of the vehicle 1000 to output a sensing signal toward the vehicle 1000. A time at which the front of the vehicle 1000 is photographed by the camera, a time at which the sensing signal is output toward the front of the vehicle 1000, and a time at which the sensing signal reflected from the object is received may be substantially the same as one another.

FIGS. 5 and 6 illustrate an example in which the electronic device 100 detects a plurality of objects located near the vehicle 1000, based on a sensing signal reflected from an object, according to some embodiments.

Referring to FIG. 5, when there is no nearby object that hinders location correction in front of the vehicle 1000 moving on the road, the electronic device 100 may sense the front of the vehicle 1000 by using a certain distance sensor, while photographing the front of the vehicle 1000. For example, when the vehicle 1000 is moving on the road, an overpass 51, a sign 52, and a traffic light 53 may be located in front of the vehicle 1000. The electronic device 100 may output a sensing signal to the front of the vehicle 1000 while photographing the front of the vehicle 1000, and receive a sensing signal reflected from the overpass 51, the sign 52, and the traffic light 53.

The electronic device 100 may identify a plurality of objects located in front of the vehicle 1000 based on the captured image and the map information. The electronic device 100 may extract the plurality of objects in the captured image by analyzing the captured image, and identify the extracted plurality of objects by comparing the extracted plurality of objects with object information registered in the map information.

The electronic device 100 may generate a graph 55 for indicating a location of the vehicle 1000 in a front region as a location corresponding to the received sensing signal, by analyzing the received sensing signal. The electronic device 100 may distinguish a region 56 indicating a sensing signal reflected from the overpass 51, a region 58 indicating a sensing signal reflected from the traffic light 53, and a region 59 indicating a sensing signal reflected from the sign 52 in the graph 55, by comparing the image captured by photographing the front of the vehicle 1000 with the graph 55.

The electronic device 100 may calculate a distance between the vehicle 1000 and the overpass 51 based on the sensing signal corresponding to the region 56. The electronic device 100 may calculate a distance between the vehicle 1000 and the traffic light 53 based on the sensing signal corresponding to the region 58. The electronic device 100 may calculate a distance between the vehicle 1000 and the sign 52 based on the sensing signal corresponding to the region 59.

The electronic device 100 may selectively calculate at least one of the distance between the vehicle 1000 and the overpass 51, the distance between the vehicle 1000 and the traffic light 53, or the distance between the vehicle 1000 and the sign 52. For example, the electronic device 100 may select an object to be used for distance calculation, based on a reliability that is preset according to a type and a location of an object. For example, the reliability of the overpass 51 crossing in perpendicular to the direction of the road on which the vehicle 1000 is moving is highest, such that the electronic device 100 may select the overpass 51 from among the overpass 51, the sign 52, and the traffic light 53 and select the distance between the overpass 51 and the vehicle 1000.

The electronic device 100 may calculate in advance the distance between the vehicle 1000 and the overpass 51, the distance between the vehicle 1000 and the traffic light 53, and the distance between the vehicle 1000 and the sign 52. In this case, the reliability of the overpass 51 is highest, such that the electronic device 100 may select the overpass 51 from among the overpass 51, the sign 52, and the traffic light 53 and select the distance between the overpass 51 and the vehicle 1000 among the calculated distances.

Referring to FIG. 6, when there is a nearby object that hinders location correction in front of the moving vehicle 1000, the electronic device 100 may sense the front of the vehicle 1000 by using a certain distance sensor. For example, when the vehicle 1000 is moving on the road, the overpass 51, the sign 52, and the traffic light 53 may be located in front of the vehicle 1000 and other vehicles may be located near the overpass 51 and the traffic light 53. The other vehicles near the overpass 51 and the traffic light 53 are not the objects registered in the map and their locations may not be identified from the map information, such that they may be objects hindering location correction of the vehicle 1000.

The electronic device 100 may photograph the front the vehicle 1000, and identify objects 61, 62, and 63 registered in the map among the plurality of objects located in front of the vehicle 1000 based on the captured image and the map information. The electronic device 100 may extract the plurality of objects in the captured image by analyzing the captured image. The electronic device 100 may identify the objects 61, 62, and 65 that are registered in the map and other vehicles that are not registered in the map among the plurality of objects, by comparing the extracted plurality of objects with object information registered in the map information.

The electronic device 100 may output a sensing signal to the front of the vehicle 1000, and receive a sensing signal reflected from the overpass 51, the sign 52, the traffic light 53, and the other vehicles.

The electronic device 100 may generate a graph 65 for indicating a location of the vehicle 1000 in a front region as a location corresponding to the received sensing signal, by analyzing the received sensing signal. The electronic device 100 may identify a region 66 indicating a sensing signal reflected from the sign 52 in the graph 65, by comparing the image captured by photographing the front of the vehicle 1000 with the graph 65.

The other vehicles are located near the overpass 51 and the traffic light 53, such that the electronic device 100 may not be able to identify a region indicating a sensing signal reflected from the overpass 51 and a region indicating a sensing signal reflected from the traffic light 53 from the graph 65. In this case, the electronic device 100 may select the sign 62 and calculate a distance between the vehicle 1000 and the traffic light 62 based on the sensing signal corresponding to the region 66.

However, a method, performed by the electronic device 100, of selecting an object to be used for distance correction is not limited thereto. The electronic device 100 may select the sign 62 from among the objects 61, 62, and 65, based on whether other vehicles that are not registered in the map are located near the objects 61, 62, and 65 registered in the map in the captured image, regardless of the sensing signal.

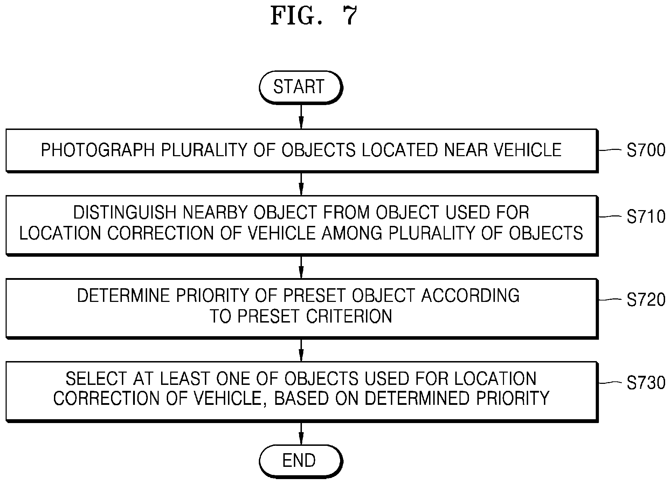

FIG. 7 is a flowchart illustrating a method, performed by the electronic device 100, for selecting an object to be used for location correction from among a plurality of objects near the vehicle 1000, based on a certain priority, according to some embodiments.

The electronic device 100 may photograph a plurality of objects located near the vehicle 1000 in operation S700, and may distinguish a nearby object that hinders location correction of the vehicle 1000 from an object to be used for location correction of the vehicle 1000 among the plurality of objects in operation S710.

In operation S720, the electronic device 100 may determine a priority of the object to be used for location correction of the vehicle 1000 according to a preset criterion. The electronic device 100 may determine a priority of an object to accurately correct the location of the vehicle 1000.

The criterion for determining the priority of the object may be preset based on various conditions. For example, the priority of the object may be determined based on a size of the object, a location of the object on a road, a slope of the road, a curvature of the road, and a relative location of the object with respect to the vehicle 1000. When the size of the object is large, the object may have a high priority. When it is determined that there are a few nearby objects hindering location correction near the object, the priority of the object may be high. When a virtual line connected from the vehicle 1000 to the object is parallel with the road, the object may have a high priority. When a virtual line indicating a distance from the vehicle 1000 to the object is parallel with a traveling direction of the vehicle 1000, the object may have a high priority.

In operation S730, the electronic device 100 may select at least one of objects to be used for location correction of the vehicle 1000, based on the determined priority. To accurately correct the location of the vehicle 1000, the electronic device 100 may select a plurality of objects to be used for location correction of the vehicle 1000.

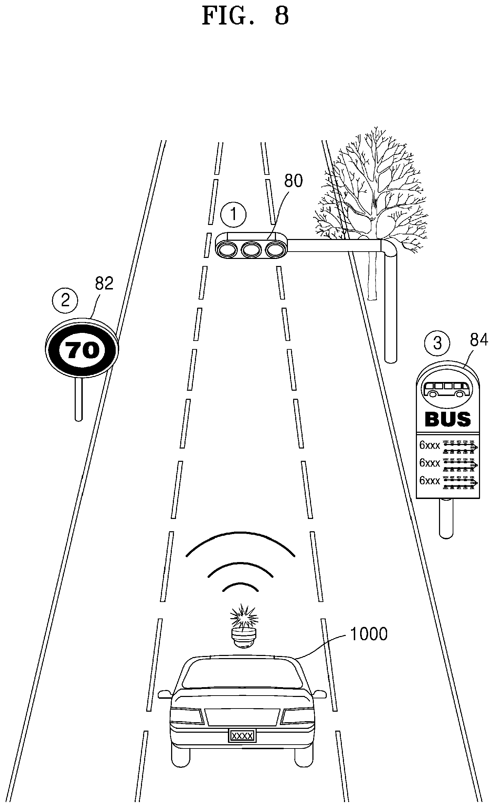

FIG. 8 illustrates an example in which the electronic device 100 determines a priority for object selection when there is no nearby object near an object to be used for location correction, according to some embodiments.

Referring to FIG. 8, when there is no nearby object that hinders location correction in front of the vehicle 1000 moving on the road, the electronic device 100 may photograph the front of the vehicle 1000 and output a sensing signal toward the front of the vehicle 1000. The electronic device 100 may detect a traffic light 80, a traffic sign 82, and a bus route map 84 located in front of the vehicle 10000.

For example, the electronic device 100 may determine that the traffic sign 82 is placed across the road in perpendicular to the direction of the road and a virtual direction connecting the vehicle 1000 with the traffic sign 82 is nearly parallel with the direction of the road. Thus, the electronic device 100 may determine a priority of the traffic light 80 as '1'.

For example, the electronic device 100 may determine that the virtual line connecting the vehicle 1000 with the bus route map 84 is nearly perpendicular to the direction of the road, and thus may determine a priority of the bus route map 84 as '3'.

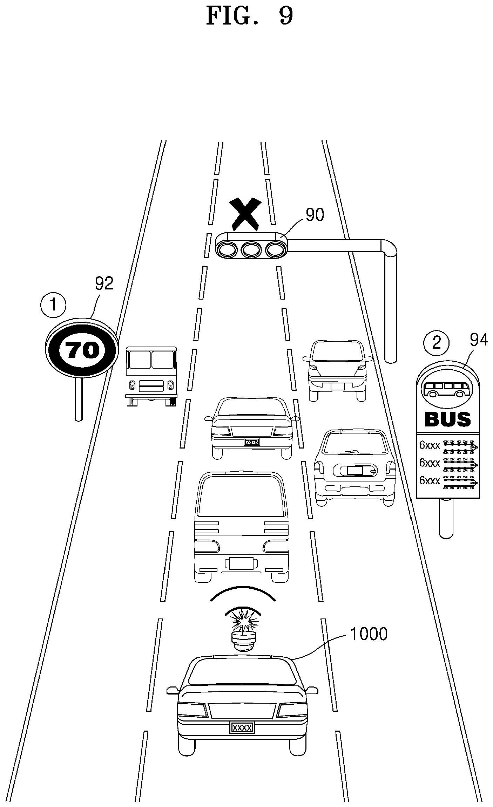

FIG. 9 illustrates an example in which the electronic device 100 determines a priority for object selection when there are many nearby objects near an object to be used for location correction, according to some embodiments.

Referring to FIG. 9, when there are many other objects that hinder location correction in front of the vehicle 1000 moving on the road, the electronic device 100 may photograph the front of the vehicle 1000 and output a sensing signal toward the front of the vehicle 1000.

The electronic device 100 may not be able to accurately calculate the distance between the vehicle 1000 and a traffic light 90 due to other vehicles located near the traffic light 90 and thus the reliability of the traffic light 90 is low, such that the electronic device 100 may determine not to use the traffic light 90 for location correction.

The electronic device 100 may determine a priority of a sign 92 with a few nearby other vehicles as '1' and a priority of a bus route map 94 with more nearby other vehicles as '2'.

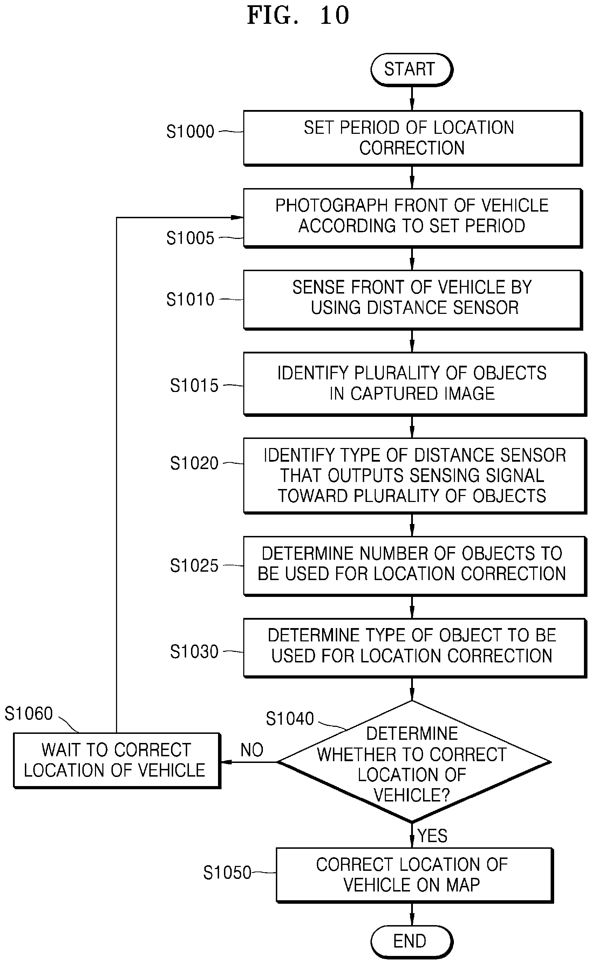

FIG. 10 is a flowchart illustrating a method, performed by the electronic device 100, for determining whether to correct a location of the vehicle 1000, according to some embodiments.

In operation S1000, the electronic device 100 may set a period for correcting the location of the vehicle 1000. The electronic device 100 may set the period for correcting the location of the vehicle 1000, based on a user input. The electronic device 100 may automatically set the period for correcting the location of the vehicle 1000, based on various conditions for the vehicle 1000. For example, the period for correcting the location of the vehicle 1000 may be set based on a traffic condition, the weather, and the temperature of the road and the speed of the vehicle 1000.

In operation S1005, the electronic device 100 may photograph the surroundings of the vehicle 1000 according to the set period. The electronic device 100 may control a camera directed near the vehicle 1000 to periodically photograph the surroundings of the vehicle 1000.

In operation S1010, the electronic device 100 may sense the surroundings of the vehicle 1000 by using a distance sensor. The electronic device 100 may output a sensing signal for sensing the surroundings of the vehicle 1000 while photographing the surroundings of the vehicle 1000.

The electronic device 100 may identify a plurality of objects from an image captured by photographing the surroundings of the vehicle 1000 in operation S1015, and identify a type of the distance sensor that outputs the sensing signal toward the plurality of objects in operation S1020.

In operation S1025, the electronic device 100 may determine the number of objects to be used for location correction. The electronic device 100 may select an object to be used for location correction of the vehicle 1000 from among the photographed plurality of objects, based on whether there is a nearby object that hinders location correction near the object to be used for location correction. In this case, the electronic device 100 may select the object to be used for location correction of the vehicle 1000, based on a reliability regarding whether a distance between the object and the vehicle 1000 may be accurately calculated. The electronic device 100 may count the number of objects to be used for location correction.

In operation S1030, the electronic device 100 may determine a type of the object to be used for location correction. For example, the electronic device 100 may determine whether the object to be used for location correction is an overpass, a sign, a building, a bus route map, etc. The electronic device 100 may determine an attribute of the object to be used for location correction. For example, the electronic device 100 may determine a size of the object, a location of the object on the road, a relative location of the object with respect to the vehicle 1000, etc.

In operation S1040, the electronic device 100 may determine whether to correct the location of the vehicle 1000. The electronic device 100 may determine whether to correct the location of the vehicle 1000 based on operations S1020 to S1030. In this case, the electronic device 100 may determine whether to correct the location of the vehicle 1000, based on a reliability regarding whether the location of the vehicle 1000 may be accurately corrected. For example, the electronic device 100 may determine the location of the vehicle 1000 based on the reliability of the object, the shape of the road, the slope of the road, the location of the vehicle 1000 on the road, the number of nearby vehicles, relative locations among the road, the vehicle 1000, and the object, etc.

When the electronic device 100 determines to correct the location of the vehicle 1000 as a result of determination in operation S1040, the electronic device 100 may correct the location of the vehicle 1000 in operation S1050.

When the electronic device 100 determines not to correct the location of the vehicle 1000 as a result of determination in operation S1040, the electronic device 100 may wait to correct the location of the vehicle 1000 without correcting the location of the vehicle 1000, in operation S1060. The electronic device 100 may wait to correct the location of the vehicle 1000 in a next period according to the set period.

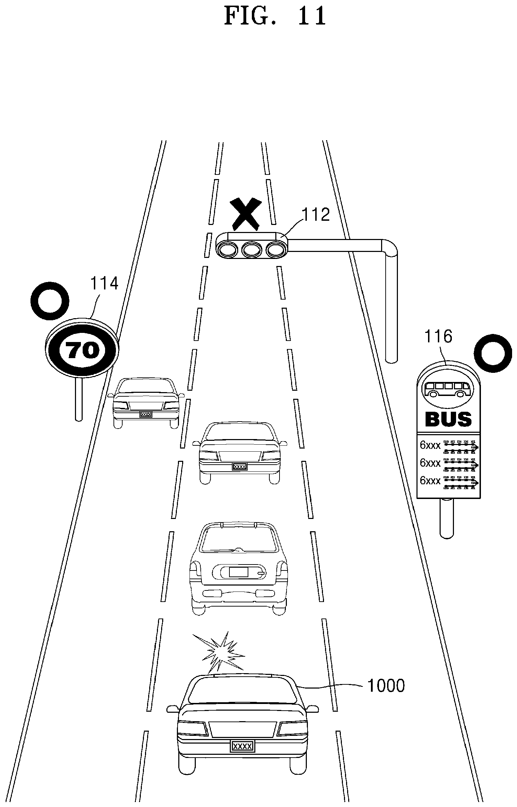

FIG. 11 illustrates an example in which the electronic device 100 determines to correct a location of the vehicle 1000, according to some embodiments.

Referring to FIG. 11, when there are a few other objects that hinder location correction in front of the vehicle 1000 moving on the road, the electronic device 100 may photograph the front of the vehicle 1000 and output a sensing signal toward the front of the vehicle 1000.

The electronic device 100 may determine that a distance between the vehicle 1000 and a traffic light 112 may not be calculated due to other vehicles located in front of the vehicle 1000. However, the electronic device 100 may determine that a distance between the vehicle 1000 and a sign 104 and a distance between the vehicle 1000 and a bus route map 106 may be calculated.

In this case, the vehicle 1000 may determine whether the distance between the vehicle 1000 and the object may be accurately calculated, based on at least one of a type of a sensor outputting a sensing signal to the front, the number of objects for location correction, or a type of an object.

There is an object to which a distance of the vehicle 1000 may be calculated, such that the electronic device 100 may determine to correct the location of the vehicle 1000.

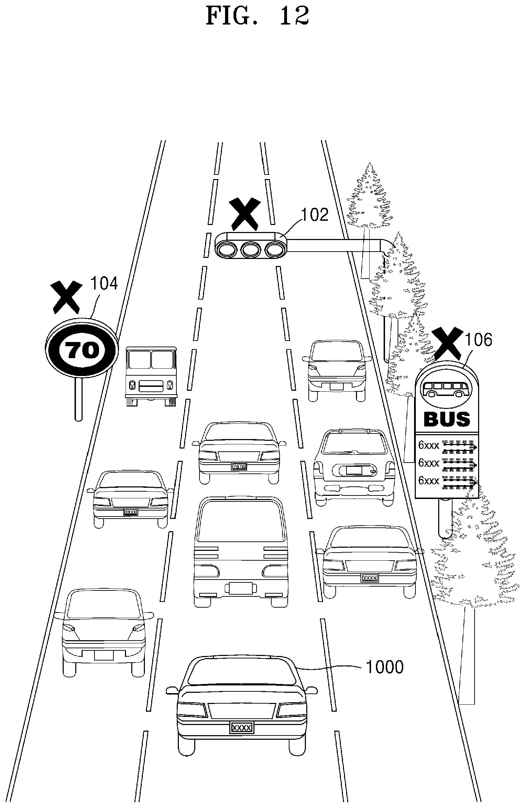

FIG. 12 illustrates an example in which the electronic device 100 determines not to correct a location of the vehicle 1000, according to some embodiments.

Referring to FIG. 12, when there are many other objects that hinder location correction in front of the vehicle 1000 moving on the road, the electronic device 100 may photograph the front of the vehicle 1000 and output a sensing signal toward the front of the vehicle 1000.

The electronic device 100 may not be able to accurately calculate a distance between the vehicle 1000 and a traffic light 102, a distance between the vehicle 1000 and a sign 104, and a distance between the vehicle 1000 and a bus route map 106 due to other vehicles and street trees located in front of the vehicle 1000, such that the electronic device 100 may determine not to correct the location of the vehicle 1000.

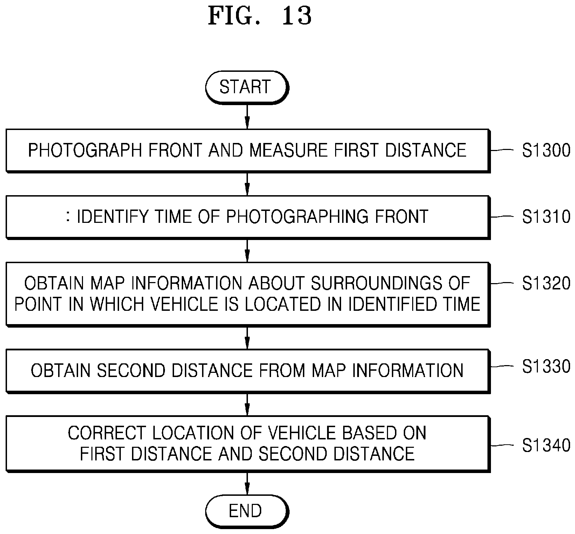

FIG. 13 is a flowchart illustrating a method, performed by the electronic device 100, of correcting a location of the vehicle 1000 by using map information, according to some embodiments.

In operation S1300, the electronic device 100 may photograph the surroundings of the vehicle 1000 and measure a first distance. The electronic device 100 may output a sensing signal toward the surroundings of the vehicle 1000 while photographing the surroundings of the vehicle 1000, and receive a sensing signal reflected from an object. The electronic device 100 may calculate the first distance between the vehicle 1000 and the object based on the output and received sensing signal.

In operation S1310, the electronic device 100 may identify a time at which the surroundings of the vehicle 1000 are photographed. The time in which the surroundings of the vehicle 1000 are photographed, a time at which the sensing signal is output, and a time at which the sensing signal is received may be substantially the same as one another.

In operation S1320, the electronic device 100 may obtain map information regarding the surroundings of a point where the vehicle 1000 is located, at the identified time. The electronic device 100 may obtain map information regarding a map of the surroundings of a point where the vehicle 1000 is located, at the identified time. The electronic device 100 may extract the map information from a memory of the electronic device 100. The electronic device 100 may receive the map information from another device connected with the electronic device 100 or a server 2000. The electronic device 100 may obtain location information indicating the point where the vehicle 1000 is located, at the identified time. The location information may include, but not limited to, a GPS value, coordinates on the map, etc.

In operation 1330, the electronic device 100 may obtain a second distance from the map information. The electronic device 100 may obtain a second distance from the location of the vehicle 1000 on the map to the object on the map, based on the point where the vehicle 100 is located on the map at the identified time and the location of the object on the map.

In operation S1340, the electronic device 100 may correct the location of the vehicle 1000, based on the first distance and the second distance. The electronic device 100 may correct the location of the vehicle 1000 based on the first distance, the second distance, the shape of the road, the slope of the road, the location of the vehicle 1000 on the road, relative locations among the road, the vehicle 1000, and the object, etc. The electronic device 100 may correct the location of the vehicle 1000 in the traveling direction of the vehicle 1000. The electronic device 100 may correct the location of the vehicle 1000 in the front-back direction of the vehicle 1000.

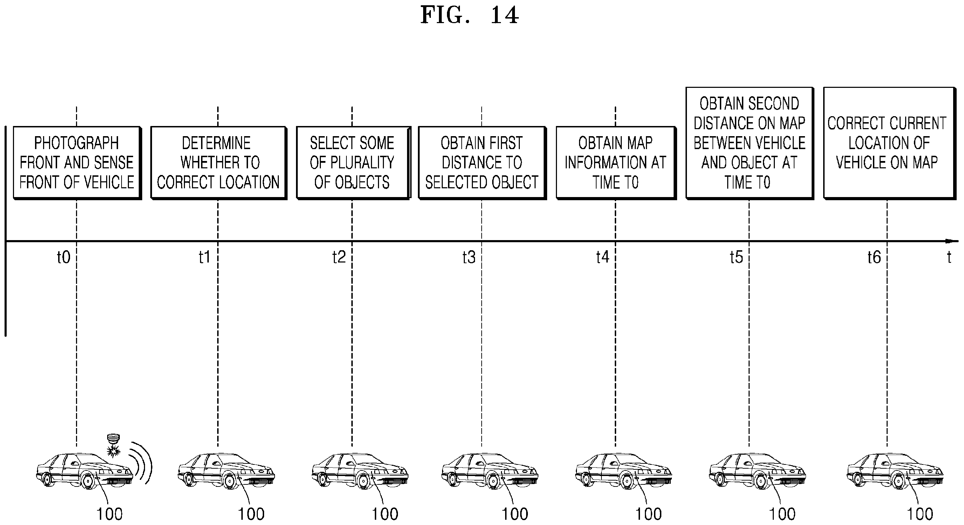

FIG. 14 illustrates an example in which the electronic device 100 corrects a location of the vehicle 1000 over time, according to some embodiments.

The electronic device 100 may sense the front of the vehicle 1000 while photographing the front of the vehicle 1000 at a time to, and determine whether to correct the location of the vehicle 1000 at a time t1.

The electronic device 100 may select an object to be used for location correction from among a plurality of objects in front of the vehicle 1000 at a time t2, and may obtain the first distance to the selected object at a time t3. The first distance may be calculated at, but not limited to, t0 through t3.

The electronic device 100 may obtain map information regarding a point where the vehicle 1000 is located at the time to. The electronic device 100 may obtain the second distance between the vehicle 1000 and the object on the map at a time t5, and correct the current location of the vehicle 1000 on the map at a time t6. By applying a location correction value of the vehicle 1000 calculated based on the time t0 to the current location of the vehicle 1000, the electronic device 100 may correct the current location of the vehicle 1000 on the map.

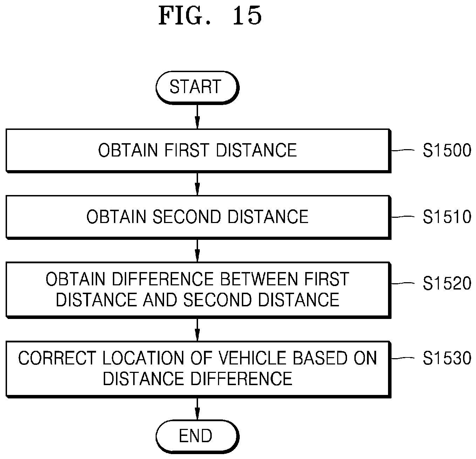

FIG. 15 is a flowchart illustrating a method, performed by the electronic device 100, of correcting a location of the vehicle 1000 when the vehicle 1000 moves on a straight road, according to some embodiments.

The electronic device 100 may obtain the first distance in operation S1500, and obtain the second distance in operation S1510.

The electronic device 100 may obtain a difference between the first distance and the second distance in operation S1530, and correct the location of the vehicle 1000 based on the difference between the first distance and the second distance in operation S1540.

When a straight road is not parallel with the virtual line connecting the vehicle 1000 with the object, the electronic device 100 may correct the location of the vehicle 1000 based on an angle between the virtual line connecting the vehicle 1000 with the object and the straight road. When the straight road is inclined, the electronic device 100 may correct the location of the vehicle 1000 based on a slope of the straight road.

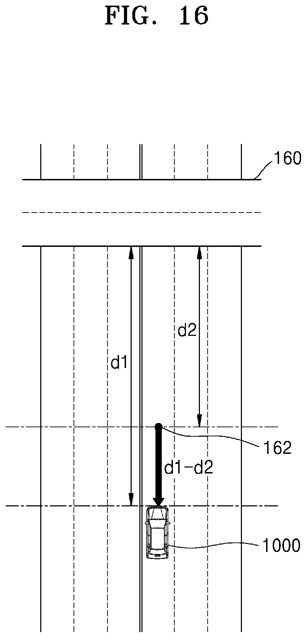

FIG. 16 illustrates an example in which the electronic device 100 calculates a distance for location correction when the vehicle 1000 moves on a straight road, according to some embodiments.

Referring to FIG. 16, when the vehicle 1000 is moving on the straight road, the electronic device 100 may measure a first distance d1 between the vehicle 1000 and an object 160. The electronic device 100 may obtain a second distance d2 between a location 162 of the vehicle 1000 on a map and the object 160. The electronic device 100 may obtain a location correction value (d1 - d2) for location correction of the vehicle 1000 by calculating a difference between the first distance d1 and the second distance d2.

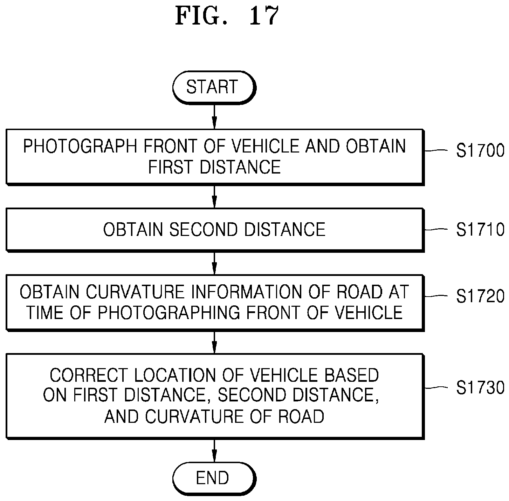

FIG. 17 is a flowchart illustrating a method, performed by the electronic device 100, of correcting a location of the vehicle 1000 when the vehicle 1000 moves on a curved road, according to some embodiments.

In operation S1700, the electronic device 100 may photograph the surroundings of the vehicle 1000 and obtain the first distance in operation S1700, and obtain the second distance in operation S1710.

In operation S1720, the electronic device 100 may obtain curvature information regarding a curvature of the road at the time of photographing the surroundings of the vehicle 1000. The electronic device 100 may obtain the curvature of the road by analyzing the shape of the road in an image captured by photographing the surroundings of the vehicle 1000. The electronic device 100 may extract the curvature information regarding the curvature of the road from map information about a location where the vehicle 1000 is moving at the time of photographing the surroundings of the vehicle 1000.

In operation S1730, the electronic device 100 may correct the location of the vehicle 1000, based on the first distance, the second distance, and the curvature of the road. By calculating an angle between a virtual line connecting the vehicle 1000 with the object and a virtual line connecting the vehicle 1000 on the map with the object on the map, based on the curvature of the road, the electronic device 100 may calculate a distance difference between an actual location of the vehicle 1000 and a location of the vehicle 1000 on the map. When the road is inclined, the electronic device 100 may correct the location of the vehicle 1000 based on a slope of the road. The electronic device 100 may correct the location of the vehicle 1000 by using triangulation. The electronic device 100 may correct the location of the vehicle 1000 by using different location measurement methods according to the curvature of the road or the amount of change in the curvature.

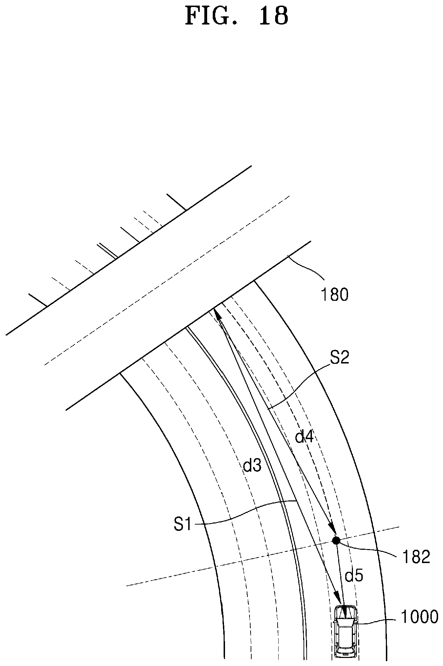

FIG. 18 illustrates an example in which the electronic device 100 calculates a distance for location correction when the vehicle 1000 moves on a curved road, according to some embodiments.

Referring to FIG. 18, when the vehicle 1000 is moving on the curved road, the electronic device 100 may measure a first distance d3 between the vehicle 1000 and an object 180. The electronic device 100 may obtain a second distance d4 between a location 162 of the vehicle 1000 on a map and the object 180.

The electronic device 100 may calculate an angle between a virtual line S1 connecting the vehicle with the object and a virtual line S2 connecting the vehicle 1000 on the map with the object on the map, by using the curvature of the curved road. The electronic device 100 may extract a curvature of a road on which the vehicle 1000 is moving at the time of photographing the object 180, and calculate the angle between the virtual line S1 and the virtual line S2 by using the extracted curvature.

The electronic device 100 may calculate a distance difference between the actual location of the vehicle 1000 and a location 182 of the vehicle 1000 on the map, by using the calculated angle, the first distance d3, and the second distance d4.

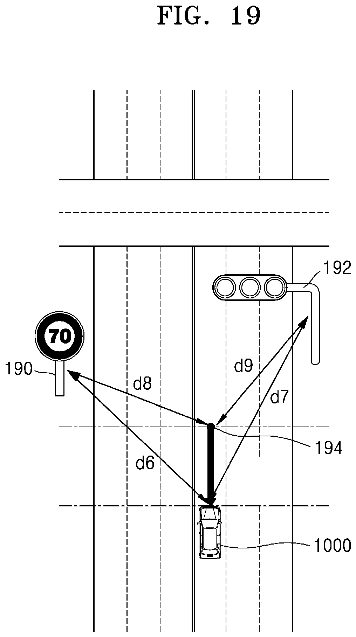

FIG. 19 illustrates an example where the electronic device 100 selects a plurality of objects for location correction of the vehicle 1000 and changes a location of the vehicle 1000 on a map based on a distance to the plurality of objects, when the vehicle 1000 moves on a straight road, according to some embodiments.

Referring to FIG. 19, when the vehicle 1000 is moving on the straight road, the electronic device 100 may select a sign 190 and a traffic sign 192 to correct the location of the vehicle 1000 on the map.

The electronic device 100 may measure a distance d6 between the vehicle 1000 and the sign 190 and calculate a distance d7 between the vehicle 1000 and the traffic light 192. The electronic device 100 may measure an angle between a virtual line connecting the vehicle 1000 with the sign 190 and a virtual line connecting the vehicle 1000 with the traffic light 192. The electronic device 100 may calculate relative locations of the vehicle 1000 with respect to the sign 190 and the traffic light 192 by using triangulation.

The electronic device 100 may calculate a distance d8 between a location 194 of the vehicle 1000 on the map and the sign 190 and calculate a distance d9 between the location 194 of the vehicle 1000 on the map and the traffic light 192. The electronic device 100 may obtain the angle between the virtual line connecting the location 194 of the vehicle 1000 on the map with the sign 190 and the virtual line connecting the location 194 of the vehicle 1000 on the map with the traffic light 192. The electronic device 100 may calculate relative locations of the vehicle 1000 on the map with respect to the sign 190 and the traffic light 192 by using triangulation.

The electronic device 100 may correct the location of the vehicle 1000 on the map by comparing relative locations of the vehicle 1000 with respect to the sign 190 and the traffic light 192 with relative locations of the vehicle 1000 on the map with respect to the sign 190 and the traffic light 192. In this case, the electronic device 100 may correct the location of the vehicle 1000 on the map in the front-back direction and a left-right direction.

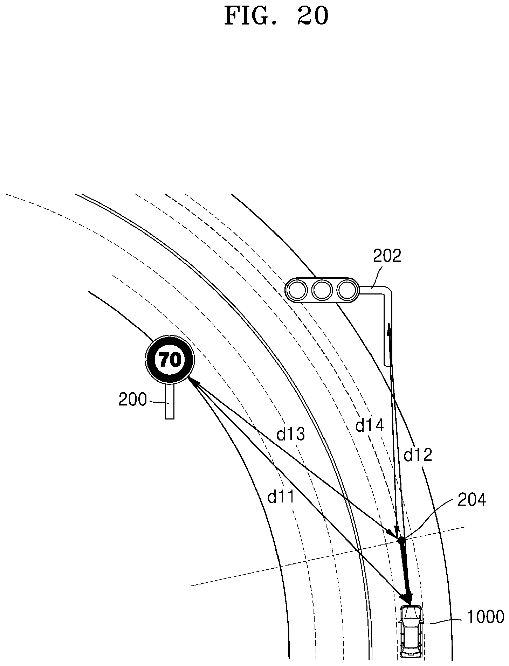

FIG. 20 illustrates an example where the electronic device 100 selects a plurality of objects for location correction of the vehicle 1000 and changes a location of the vehicle 1000 on a map based on a distance to the plurality of objects, when the vehicle 1000 moves on a curved road, according to some embodiments.

Referring to FIG. 20, when the vehicle 1000 is moving on the curved road, the electronic device 100 may select a sign 200 and a traffic sign 202 to correct the location of the vehicle 1000 on the map.

The electronic device 100 may measure a distance d11 between the vehicle 1000 and the sign 200 and calculate a distance d12 between the vehicle 1000 and the traffic light 202. The electronic device 100 may measure an angle between a virtual line connecting the vehicle 1000 with the sign 200 and a virtual line connecting the vehicle 1000 with the traffic light 202. The electronic device 100 may calculate relative locations of the vehicle 100 with respect to the sign 200 and the traffic light 202 by using triangulation.

The electronic device 100 may calculate a distance d13 between a location 204 of the vehicle 1000 on the map and the sign 200 and calculate a distance d14 between the location 204 of the vehicle 1000 on the map and the traffic light 202. The electronic device 100 may obtain the angle between the virtual line connecting the location 204 of the vehicle 1000 on the map with the sign 200 and the virtual line connecting the location 204 of the vehicle 1000 on the map with the traffic light 202. The electronic device 100 may calculate relative locations of the vehicle 1000 on the map with respect to the sign 200 and the traffic light 202 by using triangulation.

The electronic device 100 may correct the location of the vehicle 100 on the map by comparing relative locations of the vehicle 1000 with respect to the sign 200 and the traffic light 202 with relative locations of the vehicle 1000 on the map with respect to the sign 200 and the traffic light 202. In this case, the electronic device 100 may correct the location of the vehicle 1000 on the map in the front-back direction and a left-right direction.

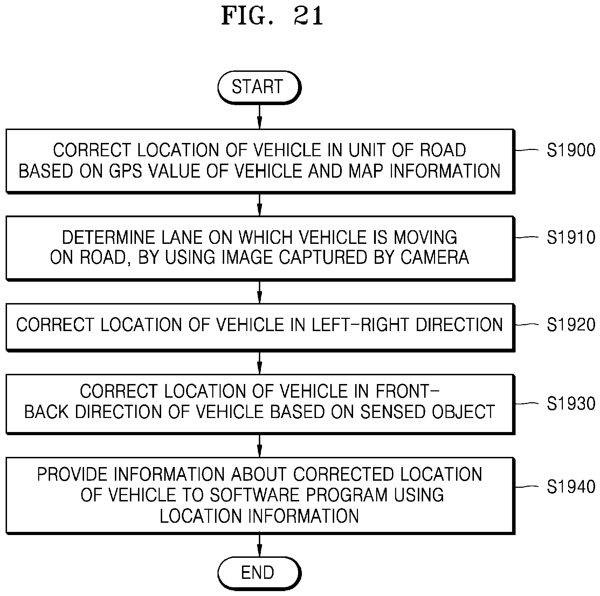

FIG. 21 is a flowchart illustrating a method, performed by the electronic device 100, of correcting a location of the vehicle 1000 in a plurality of directions, according to some embodiments.

In operation S1900, the electronic device 100 may correct the location of the vehicle 1000 in the unit of a road, based on a GPS value of the vehicle 1000 and map information. When the vehicle 1000 is located outside the road on the map, the electronic device 100 may move the location of the vehicle 1000 on the map to the inside of the road. By comparing the GPS value of the vehicle 1000 with the location of the road on the map, the electronic device 100 may correct the GPS value of the vehicle 1000 into a value indicating a location inside the road.

In operation S1910, the electronic device 100 may determine a lane on which the vehicle 1000 is moving on the map by using an image captured by a camera. By analyzing locations of lanes on the road included in an image captured by photographing the surroundings of the vehicle 1000 in the image, the electronic device 100 may determine a lane on which the vehicle 1000 is actually moving among the lanes of the road.

In operation S1920, the electronic device 100 may correct the location of the vehicle 1000 in the left-right direction. When the lane on which the vehicle 1000 is moving on the map is different from the lane on which the vehicle 1000 is actually moving, the electronic device 100 may correct the location of the vehicle 1000 in the left-right direction. By correcting the location of the vehicle 1000 in the left-right direction, the electronic device 100 may be caused to move on the map on the same lane on which the vehicle 1000 is actually moving.

The electronic device 100 may determine a lane on which the vehicle 100 is moving on a road of the map, based on the map information and the GPS value of the vehicle 1000, and correct the location of the vehicle 1000 on the map in the left-right direction by comparing the determined lane on the map with the lane on which the vehicle 1000 is actually moving.

In operation S1930, the electronic device 100 may correct the location of the vehicle 1000 in the front-back direction of the vehicle 1000, based on a sensed object. The electronic device 100 may correct the location of the vehicle 1000 in the traveling direction of the vehicle 1000 by measuring a first distance between an object sensed near the vehicle 1000 and the vehicle 1000.

In operation S1940, the electronic device 100 may provide information about the corrected location of the vehicle 1000 to a software program using the location information. For example, the electronic device 100 may provide the information about the corrected location of the vehicle 1000 to at least one of a navigation program, an autonomous driving program, or a road information collection program.

The software program using the location information may be, but not limited to a software program executed in the electronic device 100. The software program using the location information may be under execution in another electronic device communication-connected with the electronic device 100. In this case, the electronic device 100 may transmit a request for providing the information about the corrected location of the vehicle 1000 to the software program installed in the other electronic device, while transmitting the information about the corrected location of the vehicle 1000 to the other electronic device.

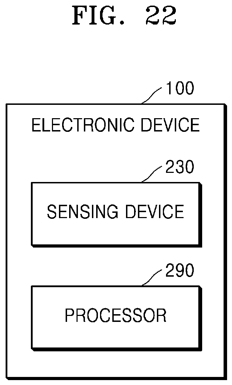

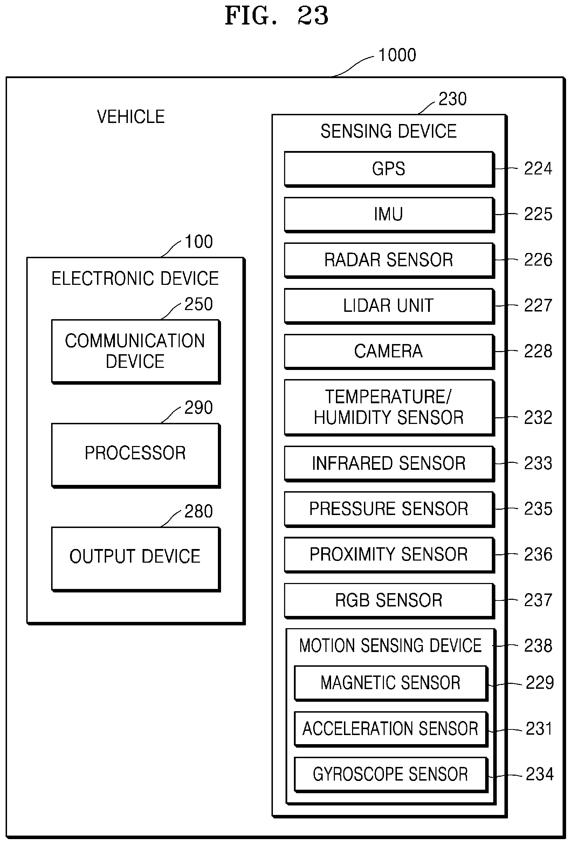

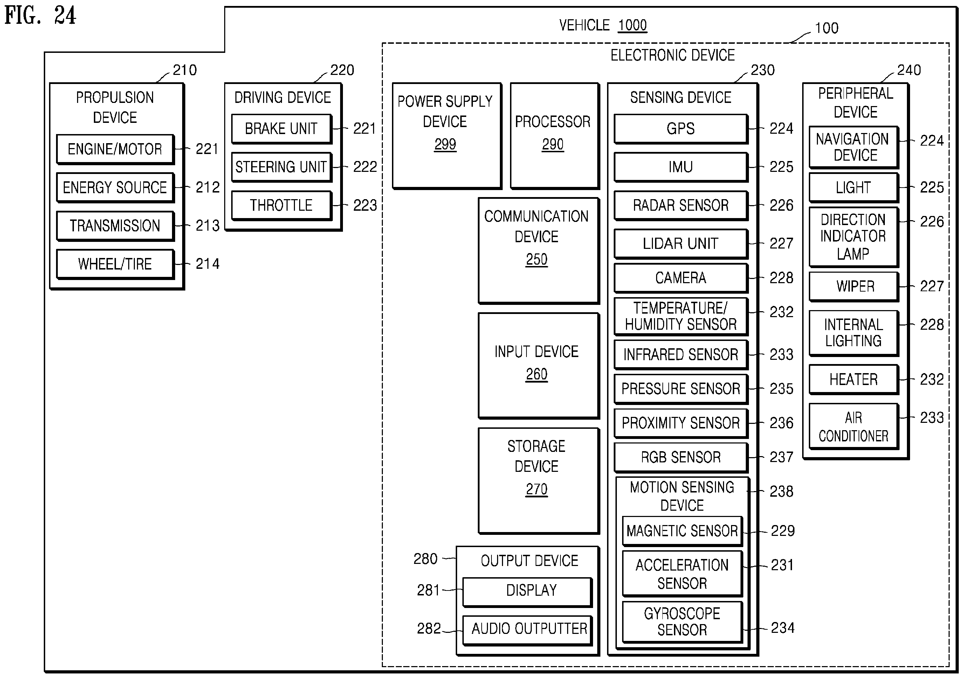

FIG. 22 is a hardware block diagram of the electronic device 100 according to some embodiments, and FIGS. 23 and 24 are hardware block diagrams of the electronic device 100 and the vehicle 1000 according to some embodiments.

As shown in FIG. 22, the electronic device 100 according to some embodiments may include a sensing device 230 and a processor 290. However, all of the elements shown in FIG. 22 are not essential elements of the electronic device 100. More elements or less elements than those shown in FIG. 22 may be used to implement the electronic device 100. For example, as shown in FIGS. 23 and 24, the electronic device 100 according to some embodiments may further include at least one of a power supply device 299, a communication device 250, an input device 260, a storage device 270, a peripheral device 240, or an output device 280. The vehicle 1000 may include, but not limited to, a propulsion device 210 and a driving device 220 as shown in FIG. 24, and may include some of the components of the electronic device 100. The electronic device 100 may be another device including the components of the electronic device 100 shown in FIG. 23, and in this case, the electronic device 100 may be communication-connected with a head unit in the vehicle 1000 and correct the location of the vehicle 1000 on the map.

Hereinbelow, functions of the components that may be included in the vehicle 1000 and the electronic device 100 will be described in more detail with reference to FIGS. 22 through 24.

The propulsion device 210 may include an engine/motor 211, an energy source 212, a transmission 213, and/or a wheel/tire 214.

The engine/motor 211 may be a combination of an internal combustion engine, an electric motor, a steam engine, and a Stirling engine. For example, when the vehicle 1000 is a gas-electric hybrid car, the engine/motor 211 may include a gasoline engine and an electric motor.

The energy source 212 may be a supply source of energy that generally or partially supplies power to the engine/motor 211. That is, the engine/motor 211 may be configured to transform the energy source 212 into mechanical energy. An example of the energy source 212 may be at least one of gasoline, diesel, propane, other compressed-gas-based fuels, ethanol, a solar panel, a battery, or other electric power sources. The energy source 212 may be at least one of a fuel tank, a battery, a capacitor, or a flywheel. The energy source 212 may provide energy to a system and a device of the vehicle 1000.

The transmission 213 may be configured to deliver mechanical power to the wheel/tire 214 from the engine/motor 211. For example, the transmission 213 may include at least one of a gearbox, a clutch, a differential device, or a driving shaft. When the transmission 213 includes driving shafts, they may include one or more axles coupled to the wheel/tire 214.

The wheel/tire 214 may be structured in various forms including four-wheeled forms of a unicycle, a bicycle/motorcycle, a tricycle, or a vehicle/truck. For example, other wheel/tire forms such as six or more wheels may be possible. The wheel/tire 214 may include at least one wheel fixedly attached to the transmission 213 and at least one tire coupled to a rim of a wheel contactable with a driving surface.

The driving device 220 may include a brake unit 221, a steering unit 222, and a throttle 223. The brake unit 221 may be a combination of mechanisms configured to decelerate the vehicle 1000. For example, the brake unit 221 may use friction to reduce the speed of the wheel/tire 214. The steering unit 222 may be a combination of mechanisms configured to adjust the direction of the vehicle 1000. The throttle 223 may be a combination of mechanisms configured to control the speed of the vehicle 1000 by controlling the operating speed of the engine/motor 211. The throttle 223 may adjust a mixed gas quantity of fuel air introduced to the engine/motor 211 by adjusting a throttle open volume, and may control power and thrust by adjusting the throttle open volume.

The sensing device 230 may include multiple sensors configured to sense information about an environment where the vehicle 1000 is located, and may include one or more actuators configured to correct a location and/or orientation of the sensors. For example, the sensing device 230 may include a GPS 224, an inertial measurement unit (IMU) 225, a radio detection and ranging (RADAR) unit 226, a light detection and ranging (LIDAR) unit 227, and a camera 228. The sensing device 230 may include, but not limited to, at least one of a temperature/humidity sensor 232, an infrared sensor 233, a pressure sensor 235, a proximity sensor 236, or a red/green/blue (RGB) sensor (or an illuminance sensor) 237. A function of each sensor may be intuitively construed from a name of each sensor by those of ordinary skill in the art, and thus will not be described in detail.

The sensing device 230 may include a motion sensing device 238 capable of sensing motion of the vehicle 1000. The motion sensing device 238 may include a magnetic sensor 299, an acceleration sensor 231, and a gyroscope sensor 234.

The GPS 224 may be a sensor configured to estimate a geometric location of the vehicle 1000. That is, the GPS 224 may include a transceiver configured to estimate the location of the vehicle 1000 with respect to the earth.

The IMU 225 may be a combination of sensors configured to sense changes in the location and orientation of the vehicle 1000 based on an inertial acceleration. For example, the combination of the sensors may include accelerometers and gyroscopes.

The RADAR unit 226 may be a sensor configured to sense objects near the vehicle 1000 by using a radio signal. The RADAR unit 226 may be configured to sense a speed and/or a direction of objects.

The LIDAR unit 227 may be a sensor configured to sense objects near the vehicle 1000 by using laser. More specifically, the LIDAR unit 227 may include a laser light source and/or a laser scanner configured to output laser and a detector configured to detect reflection of the laser. The LIDAR unit 227 may be configured to operate in a coherent (e.g., using heterodyne detection) or incoherent detection mode. The electronic device 100 may further include an ultrasonic sensor (not shown) for sensing objects near the vehicle 1000.

The camera 228 may be a still camera or a video camera for photographing the inside or the outside of the vehicle 1000. For example, when there are a plurality of cameras 228, the cameras 228 may be located in various locations inside and outside the vehicle 1000.

The peripheral device 240 may include a navigation device 241, a light 242, a direction indicator lamp 243, a wiper 244, an internal lighting 245, a heater 246, and an air conditioner 247.

The navigation device 241 may be a system configured to determine a moving route of the vehicle 1000. The navigation device 241 may be configured to dynamically update the moving route when the vehicle 1000 is moving. For example, the navigation device 241 may use data from the GPS 224 and maps to determine the moving route of the vehicle 1000. The navigation device 241 may not be separate from the electronic device 100, and the electronic device 100 may perform a function of the navigation device 241.

The storage device 270 may include a magnetic disk drive, an optical disk drive, and a flash memory. The storage device 270 may be a portable universal serial bus (USB) data storage device. The storage device 270 may store system software for executing examples related to the present disclosure. The system software for executing the examples related to the present disclosure may be stored in a portable storage medium.

The communication device 250 may include at least one antenna for wirelessly communicating with another device. For example, the communication device 250 may be used to wirelessly communicate with a cellular network or another wireless protocol and a system through wireless fidelity (WiFi) or Bluetooth. The communication device 250 controlled by the processor 290 may transmit and receive a radio signal. For example, the processor 290 may execute a program included in the storage device 270 in order for the communication device 250 to transmit and receive a radio signal to and from the cellular network.

The input device 260 may be a means that inputs data to control the vehicle 1000. For example, the input device 260 may include, but not limited to, a keypad, a dome switch, a touch pad (a capacitive overlay type, a resistive overlay type, an infrared beam type, a surface acoustic wave type, an integral strain gauge type, a piezoelectric effect type, etc.), a jog wheel, a jog switch, etc. The input device 260 may include a microphone configured to receive audio (e.g., a voice command) from a passenger of the vehicle 1000.

The outputter 280 may output an audio signal or a video signal, and may include a display 280 and an audio outputter 282.

The display 281 may include at least one of a liquid crystal display (LCD), a thin film transistor (TFT) LCD, an organic light-emitting diode (OLED), a flexible display, a three-dimensional (3D) display, and an electrophoretic display. According to implementation types of the output device 280, the output device 280 may include two or more displays 281.

The audio outputter 282 may output audio data received from the communication device 250 or stored in the storage device 270. The audio outputter 282 may include a speaker, a buzzer, or the like.

The input device 260 and the output device 280 may include a network interface and may be implemented with a touchscreen.

The processor 290 may generally control overall operations of the vehicle 1000. For example, the processor 290 may generally control at least one of the propulsion device 210, the driving device 220, the sensing device 230, the peripheral device 240, the communication device 250, the input device 260, the storage device 270, the output device 280, or the power supply device 299, by executing programs stored in the storage device 270.

The processor 290 may identify a plurality of objects located near the moving vehicle 1000, and correct a location of the vehicle 1000 on a map based on a distance between the vehicle 1000 and at least one of the plurality of objects, by executing programs stored in the storage device 270.

The processor 290 may capture a plurality of objects located near the vehicle 1000 by controlling the camera 228. The processor 290 may select at least one of the plurality of objects according to a preset criterion. The processor 290 may calculate a first distance between the selected object and the vehicle 1000, by using a distance sensor. The processor 290 may output a signal toward the plurality of objects near the vehicle 1000 by controlling the distance sensor, and receive a signal reflected from the plurality of objects. The processor 290 may obtain a second distance between the location of the vehicle 1000 on the map and a location of the selected object on the map, based on the map information and a photographing time of the plurality of objects. The processor 290 may correct the location of the vehicle 1000 on the map, based on the first distance and the second distance.

The processor 290 may distinguish a nearby object from a preset object to be used for location correction of the vehicle 1000 among the plurality of objects. The processor 290 may distinguish an object to be used for correction of the location of the vehicle 1000 from a nearby object hindering correction of the location of the vehicle 1000 in an image captured by photographing the plurality of objects.

The processor 290 may identify a type of the object to be used for location correction of the vehicle 1000. The processor 290 may the shape of the road on which the vehicle 1000 is moving at the time of photographing the plurality of objects. The processor 290 may identify a type of the distance sensor used for location correction. The processor 100 may determine whether a radar sensor has been used, a lidar sensor has been used, or an ultrasonic sensor has been used, for location correction of the vehicle 1000, without being limited thereto. The processor 290 may select at least one of the plurality of objects according to various criteria to correct the location of the vehicle 1000.

The processor 290 may determine a priority of the object to be used for location correction of the vehicle 1000 according to a preset criterion. The processor 290 may determine a priority of an object to accurately correct the location of the vehicle 1000. The criterion for determining the priority of the object may be preset based on various conditions. The processor 290 may select at least one of objects to be used for location correction of the vehicle 1000, based on the determined priority. To accurately correct the location of the vehicle 1000, the processor 290 may select a plurality of objects to be used for location correction of the vehicle 1000.

The processor 290 may identify a plurality of objects from an image captured by photographing the surroundings of the vehicle 1000, and identify a type of the distance sensor that outputs the sensing signal toward the plurality of objects. The processor 290 may determine the number of objects to be used for location correction. The processor 290 may select an object to be used for location correction of the vehicle 1000 from among the photographed plurality of objects, based on whether there is a nearby object that hinders location correction near the object to be used for location correction. In this case, the processor 290 may select the object to be used for location correction of the vehicle 1000, based on a reliability regarding whether a distance between the object and the vehicle 1000 may be accurately calculated. The processor 290 may count the number of objects to be used for location correction and determine a type of the object to be used for location correction. The processor 290 may determine an attribute of the object to be used for location correction. The processor 290 may determine whether to correct the location of the vehicle 1000 based on whether a nearby object exists, the number of objects to be used for location correction, a type of an object to be used for location correction, etc. The processor 290 may determine whether to correct the location of the vehicle 1000, based on a reliability regarding whether the location of the vehicle 1000 may be accurately corrected.

When the processor 290 determines to correct the location of the vehicle 1000, the processor 290 may correct the location of the vehicle 1000. When the processor 290 determines not to correct the location of the vehicle 1000, the processor 290 may wait to correct the location of the vehicle 1000 without correcting the location of the vehicle 1000.

The processor 290 may set a period for correcting the location of the vehicle 1000. The processor 290 may set the period for correcting the location of the vehicle 1000, based on a user input. The processor 290 may automatically set the period for correcting the location of the vehicle 1000, based on various conditions for the vehicle 1000. For example, the period for correcting the location of the vehicle 1000 may be set based on a traffic condition, the weather, and the temperature of the road and the speed of the vehicle 1000. The processor 290 may photograph the surroundings of the vehicle 1000 according to the set period. The electronic device 100 may control a camera directed near the vehicle 1000 to periodically photograph the surroundings of the vehicle 1000. The processor 290 may periodically sense the surroundings of the vehicle 1000 by using a distance sensor. The processor 290 may output a sensing signal for sensing the surroundings of the vehicle 1000 while photographing the surroundings of the vehicle 1000.

The processor 290 may output a sensing signal toward the surroundings of the vehicle 1000 while photographing the surroundings of the vehicle 1000, and receive a sensing signal reflected from an object. The processor 290 may calculate the first distance between the vehicle 1000 and the object based on the output and received sensing signal. The processor 290 may identify a time at which the surroundings of the vehicle 1000 are photographed. The time in which the surroundings of the vehicle 1000 are photographed, a time at which the sensing signal is output, and a time at which the sensing signal is received may be substantially the same as one another. The processor 290 may obtain map information regarding the surroundings of a point where the vehicle 1000 is located, at the identified time. The processor 290 may obtain map information regarding a map of the surroundings of a point where the vehicle 1000 is located, at the identified time. The processor 290 may extract the map information from a memory of the electronic device 100. The processor 290 may receive the map information from another device connected with the electronic device 100 or the server 2000. The processor 290 may obtain location information indicating the point where the vehicle 1000 is located, at the identified time. The processor 290 may obtain a second distance from the location of the vehicle 1000 on the map to the object on the map, based on the point where the vehicle 100 is located on the map at the identified time and the location of the object on the map. The processor 290 may correct the location of the vehicle 1000, based on the first distance and the second distance. The processor 290 may correct the location of the vehicle 1000 based on the first distance, the second distance, the shape of the road, the slope of the road, the location of the vehicle 1000 on the road, relative locations among the road, the vehicle 1000, and the object, etc.

The processor 290 may correct the location of the vehicle 1000 in the unit of a road, based on a GPS value of the vehicle 1000 and map information. When the vehicle 1000 is located outside the road on the map, the processor 290 may move the location of the vehicle 1000 on the map to the inside of the road. By comparing the GPS value of the vehicle 1000 with the location of the road on the map, the processor 290 may correct the GPS value of the vehicle 1000 into a value indicating a location inside the road.

The processor 290 may determine a lane on which the vehicle 1000 is moving on the map by using an image captured by a camera. By analyzing locations of lanes on the road included in an image captured by photographing the surroundings of the vehicle 1000 in the image, the processor 290 may determine a lane on which the vehicle 1000 is actually moving among the lanes of the road.

When the lane on which the vehicle 1000 is moving on the map is different from the lane on which the vehicle 1000 is actually moving, the processor 290 may correct the location of the vehicle 1000 in the left-right direction. The processor 290 may correct the location of the vehicle 1000 in the front-back direction of the vehicle 1000, based on a sensed object. The processor 290 may correct the location of the vehicle 1000 in the traveling direction of the vehicle 1000 by measuring a first distance between an object sensed near the vehicle 1000 and the vehicle 1000.

The processor 290 may provide information about the corrected location of the vehicle 1000 to a software program using the location information. For example, the processor 290 may provide the information about the corrected location of the vehicle 1000 to at least one of a navigation program, an autonomous driving program, or a road information collection program.

The power supply device 299 may be configured to provide power to all or some of the components of the vehicle 1000. For example, the power supply device 299 may include a rechargeable lithium ion or lead-acid battery.

Some embodiments of the disclosure may be implemented with a recording medium including a computer-executable instruction such as a computer-executable programming module. A computer-readable recording medium may be an available medium that is accessible by a computer, and includes all of a volatile medium, a non-volatile medium, a separated medium, and a non-separated medium. The computer-readable recording medium may also include both a computer storage medium and a communication medium. The computer storage medium includes all of a volatile medium, a non-volatile medium, a separated medium, and a non-separated medium, which is implemented by a method or technique for storing information such as a computer-readable instruction, a data structure, a programming module, or other data. The communication medium includes a computer-readable instruction, a data structure, a programming module, or other data of a modulated data signal like carriers, or other transmission mechanisms, and includes an information delivery medium.

In the specification, the term "unit" may be a hardware component like a processor or a circuit, and/or a software component executed by a hardware component like a processor.

Those of ordinary skill in the art to which the disclosure pertains will appreciate that the disclosure may be implemented in different detailed ways without departing from the technical spirit or essential characteristics of the disclosure. Accordingly, the aforementioned embodiments of the disclosure should be construed as being only illustrative, but should not be constructed as being restrictive from all aspects. For example, each element described as a single type may be implemented in a distributed manner, and likewise, elements described as being distributed may be implemented as a coupled type.

The scope of the disclosure is defined by the following claims rather than the detailed description, and the meanings and scope of the claims and all changes or modified forms derived from their equivalents should be construed as falling within the scope of the disclosure.

## Claims

1. An electronic device for correcting a location of a moving vehicle on a map, the electronic device comprising:
a location measurement device configured to obtain location information of the vehicle;
an imaging device configured to generate a captured image by photographing a plurality of objects located near the vehicle;
a sensor configured to output a sensing signal toward surroundings of the vehicle and receive a sensing signal reflected from the plurality of objects; and
a processor configured to determine the location of the vehicle on the map,
select at least one of the plurality of objects in the captured image,
calculate a first distance between the selected at least one object and the vehicle based on the reflected sensing signal, and
correct the location of the vehicle on the map based on the calculated first distance.

2. The electronic device of claim 1, wherein the processor is further configured to select an object included in the map from among objects in the captured image, based on map information about a road on which the vehicle is moving.

3. The electronic device of claim 2, wherein the processor is further configured to:
distinguish an object included in the map from an object that is not included in the map, in the captured image; and
select the at least one object based on whether the object that is not included in the map is located near the object included in the map.

4. The electronic device of claim 2, wherein the processor is further configured to:
obtain a second distance between the location of the vehicle on the map and a location of the selected at least one object on the map, based on a time at which the plurality of objects are photographed and the map information; and
correct the location of the vehicle on the map based on the obtained second distance and the first distance.

5. The electronic device of claim 4, wherein the processor is further configured to correct the location of the vehicle on the map based on the obtained second distance, the first distance, and a curvature of the road on which the vehicle is moving.

6. The electronic device of claim 3, wherein the object included in the map in the captured image comprises at least one of a traffic light or a sign.

7. The electronic device of claim 3, wherein the processor is further configured to select at least one of the plurality of objects in the captured image, based on an attribute of the object included in the map.

8. The electronic device of claim 1, wherein the processor is further configured to correct the location of the vehicle on the map in a front-back direction of the vehicle, along the road on which the vehicle is moving.

9. The electronic device of claim 1, wherein the processor is further configured to correct the location of the vehicle on the map in a left-right direction of the vehicle, based on a lane in the captured image.

10. The electronic device of claim 3, wherein the processor is further configured to determine whether to correct the location of the vehicle on the map by identifying the plurality of objects.

11. The electronic device of claim 10, wherein the processor is further configured to determine whether to correct the location of the vehicle on the map by distinguishing an object included in the map from an object that is not included in the map, in the captured image.

12. The electronic device of claim 1, wherein the processor is further configured to provide information about the corrected location of the vehicle to at least one of a navigation program, a road information collection program, or an autonomous driving program of the vehicle.

13. A method, performed by an electronic device, of correcting a location of a moving vehicle on a map, the method comprising:
determining the location of the vehicle on the map, by using a location measurement device;
obtaining a captured image by photographing a plurality of objects located near the vehicle;
outputting a sensing signal toward surroundings of the vehicle;
receiving a sensing signal reflected from the plurality of objects;
selecting at least one of the plurality of objects in the captured image;
calculating a first distance between the selected at least one object and the vehicle based on the reflected sensing signal; and
correcting the location of the vehicle on the map based on the calculated first distance.

14. The method of claim 13, further comprising obtaining map information about surroundings of the road on which the vehicle is moving,
Wherein the selecting of the at least one object comprises selecting an object included in the map from among objects in the captured image, based on the obtained map information.

15. A non-transitory computer-readable recording medium having recorded thereon a program for executing the method of claim 13 on a computer.
